# EUROPÄISCHE PATENTSCHRIFT

(11) **EP 2 049 352 B1**
(45) Veröffentlichungstag und Bekanntmachung des Hinweises auf die Patenterteilung: **19.01.2011**
(21) Anmeldenummer: 07725684.0
(22) Anmeldetag: 30.05.2007
(51) Int. Cl.: B60J 7/06

(54) **STÜTZEINRICHTUNG FÜR EIN FAHRZEUGPLANENOBERTEIL**
SUPPORT FOR A TOP TARPAULIN PART ON A VEHICLE
DISPOSITIF DE SOUTIEN POUR UNE PARTIE SUPÉRIEURE DE BÂCHE DE VÉHICULE

(30) Priorität: 31.05.2006 AT 4302006 U
(43) Veröffentlichungstag der Anmeldung: 22.04.2009
(73) Patentinhaber: Bauregger, Günter, 4702 Wallern (AT)
(72) Erfinder: Bauregger, Günter, 4702 Wallern (AT)
(74) Vertreter: Dupal, Helmut
(86) Internationale Anmeldenummer: PCT/EP2007/004795
(87) Internationale Veröffentlichungsnummer: WO 2007/137841

(56) Entgegenhaltungen:
- WO-A-94/01299
- DE-C1- 4 112 737
- FR-A- 2 837 806
- GB-A- 2 175 632
- GB-A- 2 256 621
- US-A1- 2007 001 475

## Beschreibung

Die Erfindung betrifft eine Stützeinrichtung für ein Fahrzeugplanenoberteil einer Fahrzeugplane auf einem Schiebeverdeck eines LKWs oder LKW-Anhängers oder dergl, nach dem Oberbegriff des Anspruches 1.

Bei Schiebeverdecken von Fahrzeugen wird das Fahrzeugplanenoberteil zusammengefaltet und hängt dann in den Laderaum, wobei der Belade- oder Entladevorgang gestört werden kann und Beschädigungen an Plane und Verdeck auftreten können.

In gleicher Weise können auch die Luftschläuche einer Spann-Hebeeinrichtung störend wirken ebenso wie Diagonalseile, die für den versteifenden Zusammenhalt der Fahrzeugplanenseitenteile unter dem Fahrzeugplanenoberteil angebracht sind, weil diese bei teilweise oder ganz zusammengeschobenem Verdeck ebenfalls in den Laderaum hängen. Das Document GB 2256 621 A beschreibt eine Fuhrzeig pknen-Stützeinrichtung mit Stahlstötzen.

Aufgabe der Erfindung ist es, eine Stützeinrichtung für ein Fahrzeugplanenoberteil einer Fahrzeugolane auf einem Schiebeverdeck eines LKWs oder LKW-Anhängers oder dergl., mit der es möglich ist ein Fahrzeugplanenoberteil selbst und auch die Luftschläuche einer Spann-Hebeeinrichtung, ebenso wie Diagonalseile, die für den versteifenden Zusammenhalt der Fahrzeugplanenseitenteile dienen, soweit über die Querriegel des Fahrzeugaufbaues ohne Durchgängen anzuheben, damit Belade- und Entladevorgänge nicht behindert werden und Störungen und Beschädigungen vermieden werden.

Diese Aufgabe wird bei einer Stützeinrichtung für ein Fahrzeugplanenoberteil, nach dem Oberbegrif des Anspruches 1, mit den Merkmalen des kennzeichnenden Teiles des Anspruches 1 gelöst.

Die Unteransprüche, die gleichzeitig einen Teil der Beschreibung der Erfindung bilden, betreffen besonders vorteilhafte Ausgestaltungen der Erfindung.

Mit der Anwendung einer eben in Fahrzeuglängsrichtung ausgerichteten beiderseits zwischen benachbarten Spriegeln des Schiebeverdecks, zwischen denen parallel zu den Spriegeln Halteseile ausgespannt sind, die an den Planenverdeckfaltplatten befestigt sind. Die gelenkige Anordnung derselben, so dass diese beim Zusammenschieben der Spriegel nach oben verschwenken und die an den mittigen Gelenkstellen befestigten Halteseile mit nach oben angehoben werden, ermöglicht die selbsttätige Anhebung von Planenoberteil, Luftschläuchen oder Diagonalseilen aus dem Laderaum, womit die nachteiligen Folgen von in den Laderaum hängenden Teilen vermeidbar sind.

Für die steife Gestaltung der Planenverdeckfaltplatten bestehen diese jeweils aus zwei, im wesentlichen starren Platten, die durch elastische oder mit Gelenken versehenen Gelenkstellen verbunden sind, wodurch die Abstützung des Gweichtes des Planenoberteils bei gleichzeitiger gelenkiger Ausbildung erfolgen kann.

Mit der Anbringung des Halteseils an einem Ende eingehängt an dem Gelenk der einen Planenverdeckfaltplatte befestigt mit einer Presshülse am anderen Ende über eine Abrisssicherung an der anderen Planenverdeckfaltplatte ergibt eine gegen Überlast gesicherte Stütze, die an der höchsten Stelle zwischen den Spriegeln angeordnet ist.

Zur Verbesserung des Zusammenschiebens sind die Spriegel auf den Längsträgerprofilen mit Rollen gelagert.

Die Erfindung wird an Hand der Zeichnung einer AusführungsForm beschrieben.
Es zeigt:
- Fig.1: einen Ausschnitt aus einem LKW-Fahrzeugaufbau, in Draufsicht, ohne Plane, schematisch;
- Fig.2: eine Schrägansicht durch den Fahrzeugaufbau nach Fig.1 mit zusammengeschobenen Spriegeln und teilweise angedeutetem Fahrzeugplanenoberteil, schematisch;

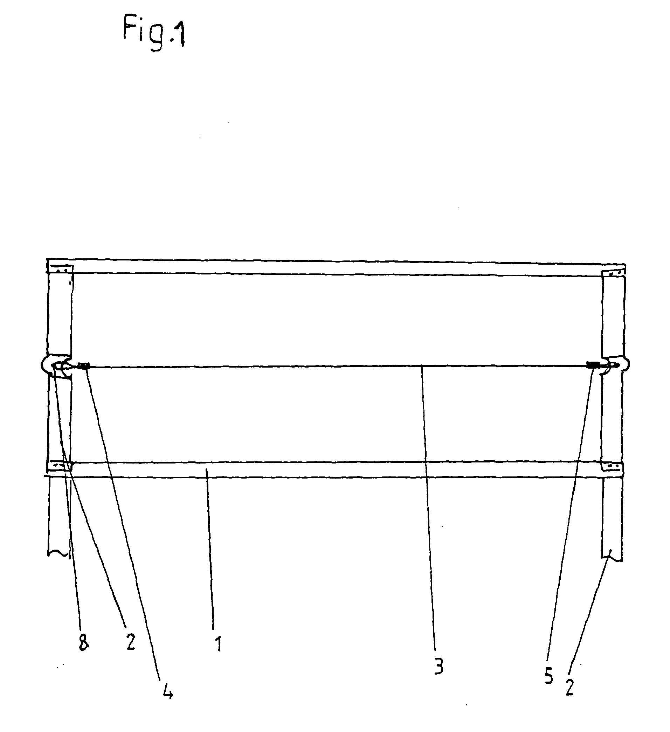

In Fig. 1 ist der obere Teil des Verdeckaufbaues bei abgenommener Plane dargestellt, mit beabstandeten Spriegeln 1, an denen beiderseits in Fahrzeuglängsrichtung verlaufende Planenverdeckfaltplatten 2 an Gelenkstellen nach oben schwenkbar befestigt sind.
Diese Planenverdeckfaltplatten 2 bestehen jeweils aus zwei starren Platten, die mittig zwischen den Spriegeln 1 an Gelenkstellen verbunden sind, an denen die beiden Enden eines parallel zu den Spriegeln 1 aufgespannten Halteseils 3 befestigt sind.
An einem Ende ist das Halteseil 3 mit einer Schlaufe, die mit einer Presshülse 4 gesichert ist und am anderen Ende mit einer Abrisssicherung 5 befestigt.

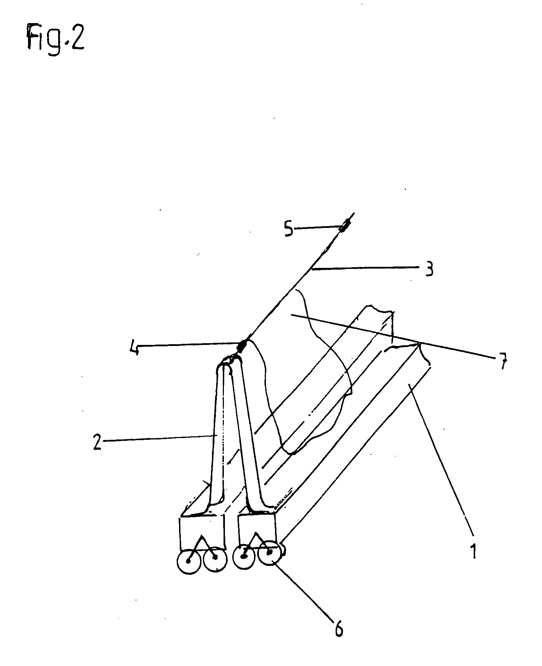

In Fig.2 ist die Anordnung mit zusammengeschobenen Spriegeln 1 wiedergegeben, die mit Rollen 6 für den Lauf auf Längsprofilträgern vorgesehen sind.
Die eine der beiden Planenverdeckfaltplatten 2 ist dargestellt, um die Gelenkstellen an den Spriegeln 1 in hochgeschwenkte Lage gebracht. Das Halteseil 3 an der mittigen Gelenkstelle befestigt, ist in der höchsten Lage über den Spriegeln 1 und ein Ausschnit des mitgehobenen Fahrzeugplanenoberteils 7 ist angedeutet.

### Legende

- 1: Spriegel
- 2: Planenverdeckfaltplatte
- 3: Halteseil
- 4: Presshülse
- 5: Abrisssicherung
- 6: Rolle der Spriegellagerung
- 7: Fahrzeugplane

## Patentansprüche

1. Stützeinrichtung für ein Fahrzeugplanenoberteil auf einem Schiebeverdeck eines LKWs oder LKW-Anhängers oder dergl., insbesonders mit einem oder mehreren Luftschläuchen einer Spann-Hebeeinrichtung unter dem Fahrzeugplanenoberteil angeordnet und in Längsrichtung des Fahrzeuges ausgerichtet, sowie für diagonal angebrachte Seile zur Seitenversteifung der Planenseitenteile, für deren Halterung bei teilweise oder ganz zusammengeschobenen Verdeck, **dadurch gekennzeichnet, dass** unter diesen, jeweils zwischen zwei benachbarten Spriegeln (1), parallel zu diesen, ein Halteseil (3) oder ein Halteband, ein Haltedraht oder ein Federstahlprofil ausgespannt ist, das beiderseits je an einer eben in Fahrzeuglängsrichtung ausgerichteten Planenverdeckfaltplatte (2) befestigt ist, deren Enden an den benachbarten Spriegeln (1) des Verdecks angebracht sind und dort und etwa mittig zwischen den Spriegeln (2), mit Gelenkstellen ausgebildet sind, mit denen die Planenverdeckfaltplatten (2) beim Zusammenschieben der Spriegel (1) nach oben zusammenfaltend das Planenoberteil und gegebenenfalls den oder die Luftschläuche, sowie Diagonalseile nach oben hebend im Bereich der Spriegel (2) halten.

2. Stützeinrichtung nach dem vorhergehenden Anspruch, **dadurch gekennzeichnet, dass** die Planenverdeckfaltplatten (2) jeweils aus zwei, im wesentlichen starren Platten, die durch elastische oder mit Gelenken versehenen Gelenkstellen verbunden sind.

3. Stützeinrichtung nach Anspruch 1, **dadurch gekennzeichnet, dass** das Halteseil (3) an einem Ende mit einer Schlaufe an dem Gelenk der einen Planenverdeckfaltplatte (2) eingehängt und mit einer Presshülse (4) am anderen Ende über eine Abrisssicherung (5) an der anderen Planenverdeckfaltplatte (2) befestigt ist.

4. Stützeinrichtung nach einem der vorhergehenden Ansprüche, **dadurch gekennzeichnet, dass** die Spriegel (2) auf den Längsträgerprofilen mit Rollen (6) verschiebbar gelagert sind.

## Claims

1. Support device for a top tarpaulin part on a folding top of a truck or trailer or similar, especially with one or several pneumatic tubes of a clamping-lifting device, which is/are arranged underneath the top part of the vehicle tarpaulin and extend/s in the longitudinal direction of the vehicle, and for diagonally mounted ropes used for laterally bracing the lateral tarpaulin parts and retaining said lateral tarpaulin parts when the folding top is partly or entirely folded. The invention is **characterized in that** a holding rope (3), a holding strap, a holding wire or a profiled spring steel element, both sides of which are fastened to one respective level tarpaulin folding plate (2) extending in the longitudinal direction of the vehicle, is stretched between two adjacent hoops (1) parallel thereto, underneath the pneumatic tubes and the diagonally mounted ropes. The ends of the tarpaulin folding plate (2) are mounted on the adjacent hoops (2) of the folding top and are embodied with articulated points in the area of the hoops (1) and approximately in the centre therebetween, the tarpaulin folding plates (2) retaining the top tarpaulin part such that the same is folded upward and, if necessary, retaining the pneumatic tube/s and diagonal ropes such that the same are raised by means of the articulated points when the hoops (2) are pushed together.

2. Support device according to according to the preceding claim, which is **characterized in that** the tarpaulin folding plates (2) consist of two essentially rigid plates which are connected to each other using elastic joints or articulated joints.

3. Support device according to according to claim 1, which is **characterized in that** the holding rope (3) is suspended on one end - using a strap - at the articulation of the tarpaulin folding plate (2) and fixed on the other end - using a press sleeve (4)- at the other tarpaulin folding plate via a ripping protection (5).

4. Support device according to one of the preceding claims, which is **characterized in that** the hoops (2) on the profiled longitudinal girders in are mounted in a shiftable way by means of rollers (6).

## Revendications

1. Dispositif de soutien destiné à une partie supérieure de bâche de véhicule sur un toit coulissant d'un camion ou d'une remorque de camion ou analogue, en particulier avec un ou plusieurs tuyaux d'air d'un dispositif de tension-levage étant placé(s) sous la partie supérieure de la bâche de véhicule et orienté(s) dans le sens longitudinal du véhicule. Ce dispositif de soutien est également destiné à soutenir des câbles installés en diagonale lorsque le toit est partiellement ou entièrement poussé, lesquels câbles sont prévus pour renforcer les parties latérales de la bâche. L'invention est marqué par le fait qu'un câble de retenue (3) un cordon de retenue, un fil de retenue ou un profilé en acier à ressort, qui est fixé, des deux côtés, à un panneau pliant de toit bâché (2) orienté dans le sens longitudinal du véhicule, est tendu sous le toit entre deux arceaux adjacents (1) et parallèlement à ces derniers. Les extrémités dudit panneau sont fixées aux arceaux adjacents (1) du toit et pourvus de points d'articulation approximativement au centre entre les arceaux (2), points d'articulation au moyen desquels les panneaux pliants de toit bâché (2), en position repliée vers le haut lorsque les arceaux (1) sont poussés l'un contre l'autre, soutiennent la partie supérieure de la bâche, et éventuellement le ou les tuyaux d'air, ainsi que des câbles en diagonale en position soulevée vers le haut au niveau des arceaux (2).

2. Dispositif de soutien selon l'exigence précédente, marqué par le fait que les panneaux pliants de toit bâché (2) consistent de deux panneaux essentiellement rigides étant reliés par des articulations élastiques ou des points d'articulation.

3. Dispositif de soutien selon l'exigence 1, marqué par le fait que le câble de retenue (3) est accroché - sur une extrémité - avec une boucle à l'articulation d'un panneau pliant de toit bâché (2) et attaché - sur l'autre extrémité - via une protection anti-arrachement (5) à l'autre panneau pliant de toit bâché en utilisant une douille de serrage (4).

4. Dispositif de soutien selon l'un des exigences précédentes, marqué par le fait que les arceaux (2) sont montés à translation sur les profilés longitudinaux à travers des rouleaux (6).
